# EUROPÄISCHE PATENTSCHRIFT

(11) **EP 1 708 910 B1**
(45) Veröffentlichungstag und Bekanntmachung des Hinweises auf die Patenterteilung: **19.11.2008**
(21) Anmeldenummer: 05701138.9
(22) Anmeldetag: 24.01.2005
(51) Int. Cl.: B60S 1/34

(54) **SCHEIBENWISCHERANLAGE FÜR FAHRZEUGE, INSBESONDERE STRASSENFAHRZEUGE**
WINDSHIELD WIPER SYSTEM FOR VEHICLES, PARTICULARLY ROAD VEHICLES
SYSTEME D'ESSUIE-GLACE POUR VEHICULES, EN PARTICULIER POUR VEHICULES ROUTIERS

(30) Priorität: 26.01.2004 DE 102004003802
(43) Veröffentlichungstag der Anmeldung: 11.10.2006
(73) Patentinhaber: Valeo Wischersysteme GmbH, 74321 Bietigheim-Bissingen (DE)
(72) Erfinder: FINK, Andreas, 71723 Grossbottwar (DE); SCHÜRLEIN, Peter, 74072 Heilbronn (DE)
(74) Vertreter: Jahn, Wolf-Diethart
(86) Internationale Anmeldenummer: PCT/EP2005/000647
(87) Internationale Veröffentlichungsnummer: WO 2005/070735

(56) Entgegenhaltungen:
- EP-A- 0 779 191
- US-A- 6 065 179

## Beschreibung

Die Erfindung bezieht sich auf eine Scheibenwischeranlage gemäß dem Oberbegriff des Patentanspruchs 1. Eine solche Anlage ist aus der EP O 779 191 A bekannt.

Eine Scheibenwischeranlage dieser Art ist in verschiedenen Ausführungen bekannt (DE 37 34 201 A1; DE 195 01 211 A1 oder DE 198 07 062 A1). Eine Besonderheit dieser bekannten Scheibenwischeranlagen besteht darin, dass durch eine spezielle Kinematik bzw. durch die von den ersten und zweiten Gelenkarmen, dem Wischarmträger und den ersten bis vierten Gelenken gebildete Vier-Gelenkanordnung während des Betriebs des Scheibenwischers zusätzlich zu der Schwenkbewegung des Wischarmes bzw. Wischblattes zwischen der Parkstellung und Wendestellung auch eine Hubbewegung radial oder im wesentlichen radial zur Schwenkbewegung erfolgt. Durch diese zusätzliche Hubbewegung wird nicht nur eine Optimierung des Wischfeldes möglich, sondern es ist bei bestimmten Verhältnissen von Scheibenhöhe zu Scheibenbreite auch möglich, mit nur einem einzigen Wischarm das gesetzlich vorbeschriebene Wischfeld zu erreichen. Besonders bei Kleinwagen mit einem relativ großen Höhen/Breitenverhältnis der Frontscheibe ergeben sich bei Verwendung einer solchen Wischanlage mit zusätzlicher Hubbewegung des Wischarmes erhebliche Vorteile, und zwar u.a. hinsichtlich einer Reduzierung des benötigten Einbauvolumens, der erforderlichen Bauteile und der damit verbundenen Kosten. Auch im Servicefall ist es dann nur erforderlich, ein einziges Wischblatt auszutauschen, was zu einer Reduzierung der Unterhaltskosten eines Fahrzeugs beiträgt.

Bekannt sind weiterhin auch Scheibenwischeranlagen (US 3 600 739 und FR 1 280 274), bei denen das jeweilige Wischblatt an einem Wischblattträger befestigt ist, der seinerseits um eine Gelenkachse senkrecht zur Ebene der Fahrzeugscheibe schwenkbar am Wischarm gehalten ist. An dem Wischblattträger ist um eine Achse parallel zu dieser Gelenkachse ein Ende einer Koppelstange angelenkt, die an ihrem anderen Ende schwenkbar an einem fahrzeugseitigen ortsfesten Gelenkstift, d.h. an einem an einer Platine des Scheibenwischerantriebs vorgesehenen Gelenkstift gelagert ist, der sich in der Nähe der Schwenkachse bzw. Wischerwelle des Wischarmes befindet, gegenüber dieser Schwenkachse aber radial versetzt ist. Die zusätzliche Hubbewegung zur Optimierung des Wischfeldes ist mit der Kinematik dieser bekannten Scheibenwischeranlagen nicht möglich.

Aufgabe der Erfindung ist es, eine Wischeranlage der eingangs erwähnten Art dahingehend weiterzubilden, dass sie unter Beibehaltung der vorteilhaften, zusätzlichen Hubbewegung in den Endstellungen, d.h. in der Parkposition sowie auch in den Wendestellungen eine optimale Lage des Wischblattes in Bezug auf angrenzende Randbereiche der Fahrzeugscheibe aufweist.

Zur Lösung dieser Aufgabe ist eine Scheibenwischeranlage entsprechend dem Patentanspruch 1 ausgebildet.

Auch bei der erfindungsgemäßen Scheibenwischeranlage weist die von dem Hebelgetriebe gebildete Kinematik wiederum die zusätzliche Hubbewegung des Wischarmes bzw. Wischblattes und das hierfür dem Wischarm zugeordnete Viergelenk auf, und zwar mit dem ersten bis vierten Gelenk im Sinne der Erfindung, von denen das zweite und vierte Gelenk wiederum fahrzeugseitige, d.h. ortsfeste Gelenke sind. Über die Koppel sind der bei der Erfindung schwenkbar am Wischarm vorgesehene Wischblattträger und damit auch das an diesem Träger befestigte Wischblatt beim Schwenken des Wischarmes in ihrer Orientierung derart steuerbar, dass insbesondere in der Parkstellung oder einer dieser Parkstellung entsprechenden Wendestellung sowie auch in der dem maximalen Schwen kwinkel des Wischarmes entsprechenden Wendestellung eine möglichst parallele Lage des Wischblattes - auch in dem erforderlichen Abstand zum Rand oder zur Einfassung der Fahrzeugfrontscheibe - unter Einhaltung des gesetzlich vorgeschriebenen Wischfeldes erreicht ist. Die Erfindung ermöglicht weiterhin einen harmonischen Wischablauf.

Bei einer Ausführungsform der Erfindung wirken die Koppel bzw. ein diese Koppel bildender Koppelhebel zwischen dem Wischblattträger und dem ersten Hebelarm, der dann bevorzugt der für die hin- und hergehende bzw. pendelnde Schwenkbewegung von dem elektromotorischen Scheibenwischerantrieb angetriebene Hebelarm ist und hierfür beispielsweise auf der Ausgangswelle eines reversierenden Antriebs vorgesehen ist.

Grundsätzlich ist es aber auch möglich, die Kinematik so auszubildenden, dass eine Steuerung des Wischblattträgers und damit des Wischblattes jeweils nur am Ende des Bewegungsablaufs bzw. der Schwenkbewegung des Wischarmes eintritt. Weiterhin ist es grundsätzlich auch möglich, die zusätzlichen Hubbewegung nicht durch ein Gelenkviereck zu erreichen, sondern durch eine Nocken- und/oder Kulissensteuerung.

Weiterbildungen der Erfindung sind Gegenstand der Unteransprüche. Die Erfindung wird im Folgenden anhand der Figuren an einem Ausführungsbeispiel näher erläutert. Es zeigen:
- Figuren 1 und 2: in vereinfachter Darstellung die Elemente einer als Hebelgetriebe ausgebildeten Kinematik einer Scheibenwischeranlage mit hubgesteuertem Wischarm und mit zusätzlich gesteuertem Wischblatt in einer Ausgangs- bzw. Parkstellung (Fig. 1) sowie in einer maximalen Schwenkstellung oder Umkehr- bzw. Wendestellung (Fig. 2);
- Fig. 3: eine Darstellung ähnlich Fig. 1 und 2, jedoch in einer Zwischenstellung des Wischarmes bzw. Wischblattes;
- Fig. 4: in vereinfachter Darstellung eine Draufsicht auf einen Schwenk- oder Wischblattträger der Scheibenwischeranlage der Figuren 1 - 3 sowie auf ein an diesem Wischblattträger befestigtes Wischblatt,
- Fig. 5: in vereinfachter Darstellung einen Schnitt entsprechend der Linie I - I der Fig. 4.

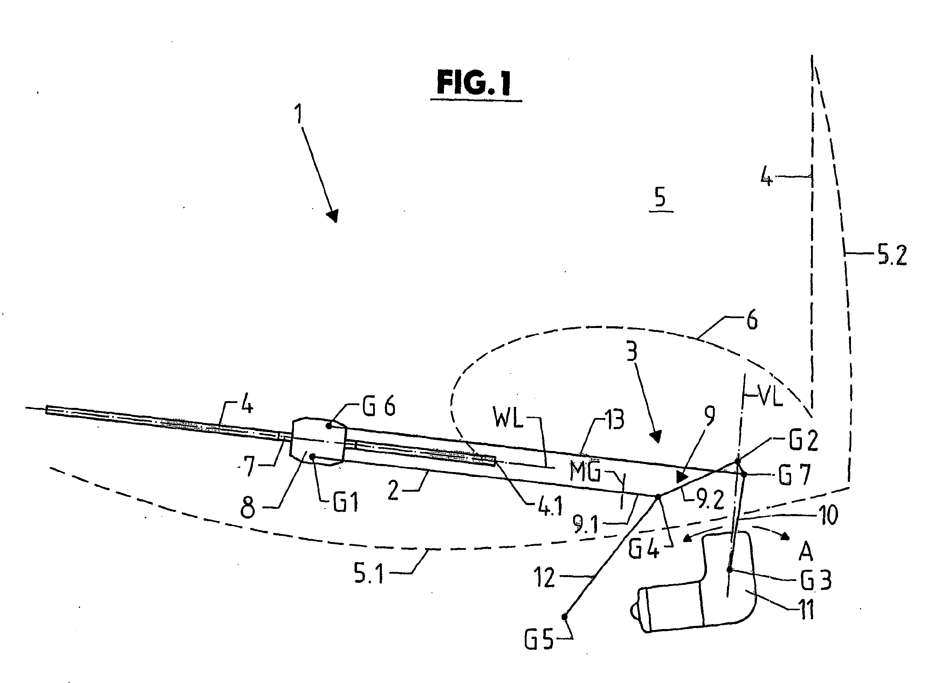

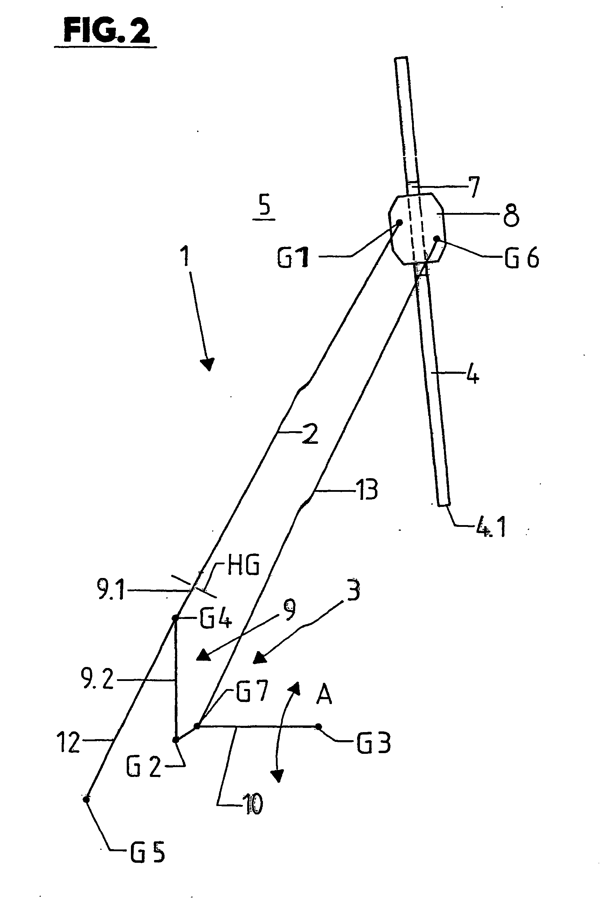

Die in den Figuren aiigemein mit 1 bezeichnete Scheibenwischeranlage, die insbesondere zur Verwendung bei einem Straßenfahrzeug geeignet ist, besteht u.a. aus einer auch einem Wischarm 2 umfassenden und von weiteren Hebelarmen gebildeten bzw. als Hegelgetriebe ausgeführten Kinematik 3. Die Kinematik 3 ist dabei so ausgebildet, dass mit ihr ein am Wischarm 2 vorgesehenes Wischblatt 4 über eine Fahrzeug-Frontscheibe 5 zwischen einer Park- oder Ausgangsstellung, die in der Fig. 1 dargestellt ist und in der das Wischblatt 4 mit seiner Längserstreckung (Wischblattlängsachse WL) parallel oder im wesentlichen parallel zu einem unteren horizontalen oder im wesentlichen horizontalen Rand (Linie 5.1) der Frontscheibe 5 angeordnet ist, und einer maximalen Schwenkstellung, d.h. einer Wendestellung bewegbar ist, die in der Fig. 2 dargestellt ist und in der das Wischblatt 4 mit seiner Wischblattlängsachse WL parallel oder im wesentlichen parallel zu der sogenannten A-Säule der Fahrzeug-Karosserie und zu dem dortigen Rand (Linie 5.2) der Frontscheibe 5 liegt, und zwar jeweils in einem vorgegebenen Abstand von dem betreffenden Rand.

Die Bewegung des Wischblattes 4 zwischen diesen beiden Endstellungen erfolgt weiterhin so, dass bei dem Wischvorgang zumindest das gesamte, gesetzlich vorgeschriebene Sichtfeld der Frontscheibe 5 erfasst wird, und zwar beispielsweise bei Verwendung der Scheibenwischeranlage 1 bei einem Kleinwagen mit einem einzigen Wischblatt 4 das gesetzlich vorgeschriebene Sichtfeld sowohl der Fahrerseite als auch der Beifahrerseite. Das dem Schnittpunkt der Linien 5.1 und 5.2 näher liegende und in der Wendestellung (Fig. 2) untere Wischblattende 4.1 bewegt sich dabei auf einer Bewegungsbahn oder Kurve 6, die einen schneckenartigen Verlauf aufweist, an ihrem der Parkstellung des Wischblattes 4 entsprechenden Ende einen kleineren Krümmungsradius besitzt als an dem der Wendestellung entsprechenden Ende und mit ihrer konkaven Seite in dem Schnittpunkt zwischen den beiden Linien 5.1 und 5.2 zugewandt ist.

Das Wischblatt 4, welches bei der dargestellten Ausführungsform ein Flachwischblatt ist, aber auch ein Wischblatt anderer Art sein kann, ist etwa in der Mitte mit einem dort vorgesehenen Wischblatt-Adapter 7 fest mit einem Gelenk- oder Wischblattträger 8 verbunden.

Gegenüber der Wischblatt-Längsachse WL versetzt und von dieser beabstandet ist der Wischarm 2 an dem Wischblattträger 8 angelenkt, und zwar mittels des Gelenks G1 um eine Schwenkachse senkrecht zur Ebene der Frontscheibe 5.

Der Wischarm 2 ist an seinem dem Gelenk G1 entfernt liegenden Ende mittels eines Hilfsgelenkes HG schwenkbar an einem Wischarmlagerelement 9 befestigt, und zwar um eine Achse parallel zur Ebene der Frontscheibe 5 und senkrecht zur Achse des Gelenkes G1, um u.a. ein federndes Anliegen des Wischblattes 4 an der Frontscheibe 5 durch eine nicht dargestellte Feder sowie ein Auswechseln des Wischblattes 4 zu ermöglichen. Bei der dargestellten Ausführungsform ist das Wischarmlagerelement als doppelarmiger Hebel mit den Helelarmen oder - abschnitten 9.1 und 9.2 ausgebildet. Bei gegen die Frontscheibe 5 anliegendem Wischblatt 4 liegt die Längserstreckung des Wischarmes 2 achsgleich oder etwa achsgleich mit der Längserstreckung des Abschnittes 9.1. Bezüglich der Kinematik bilden somit der Abschnitt 9.1 und der mit diesem über das Gelenk HG verbundenen Wischarm 2 einen gemeinsamen längeren Hebelarm eines doppelarmigen Hebels, dessen anderer wesentlich kürzerer Hebelarm oder Abschnitt 9.2 mit dem aus dem Wischarm 2 und dem Abschnitt 9.1 bestehenden Hebelarm einen Winkel α einschließt. Dieser Winkel α ist größer als 90°, aber kleiner als 180° und öffnet sich zu der Wischblattlängsachse WL und bei in der Parkstellung befindlichem Wischblatt 4 zur Frontscheibe 5 hin. Bei der dargestellten Ausführungsform liegt der Winkel α in einem Bereich zwischen 145° und 150°.

Das freie Ende des Abschnitts 9.2 ist mittels eines Gelenkes G2 gelenkig mit einem Antriebshebel 10 verbunden, der an seinem dem Gelenk G2 entfernt liegenden Ende an einem festen, d.h. fahrzeug- bzw. karosserieseitigen Gelenk G3 gelagert und um die Achse dieses Gelenkes pendelnd, d.h. hin und her schwenkbar angetrieben ist, wie dies in den Figuren mit dem Doppelpfeil A angedeutet ist. Bei einer bevorzugten Ausführungsform der Erfindung ist das Gelenk G3 von dem Lager einer Ausgangswelle eines reversierenden elektromotorischen Scheibenwischerantriebs 11 gebildet, d.h. der Antriebshebel 10 ist an seinem dem Gelenk G2 entfernt liegenden Ende auf der Welle dieses Antriebs 11 derart befestigt, dass sich der Antriebshebel 10 radial von dieser Antriebswelle weg erstreckt.

Am Übergang zwischen den beiden Abschnitten 9.1 und 9.2 ist das Wischarmlagerelement 9 mit einem Gelenk G4 an einem Ende eines Steuerhebels 12 angelenkt, der mit seinem anderen Ende an einem festen, d.h. fahrzeugs- bzw. karosserieseitigen Gelenk G5 schwenkbar gelagert ist.

Die beiden fahrzeugseitigen Gelenke G3 und G5 sind räumlich voneinander beabstandet und zwar derart, dass sich beide Gelenke außerhalb der Frontscheibe 5 und unterhalb der Linie 5.1 befinden und das Gelenk G3 sowohl von der Linie 5.1, als auch von der Linie 5.2 einen kleineren Abstand als das Gelenkes G5 besitzt. Der Wischarm 2, das Wischarmlagerelement 9 mit seinen beiden Abschnitten 9.1 und 9.2, der Antriebshebel 10, der Steuerhebel 12 und die Gelenke G2, G3, G4 und G5 bilden ein erstes Gelenkviereck, mit dem beim Wischvorgang zusätzlich zur Schwenkbewegung des Wischarmes 2 bzw. des Wischblattes 4 eine Hubbewegung des Wischarmes 2 erreicht wird, wie dies auch die Kurve 6 wiederspiegelt.

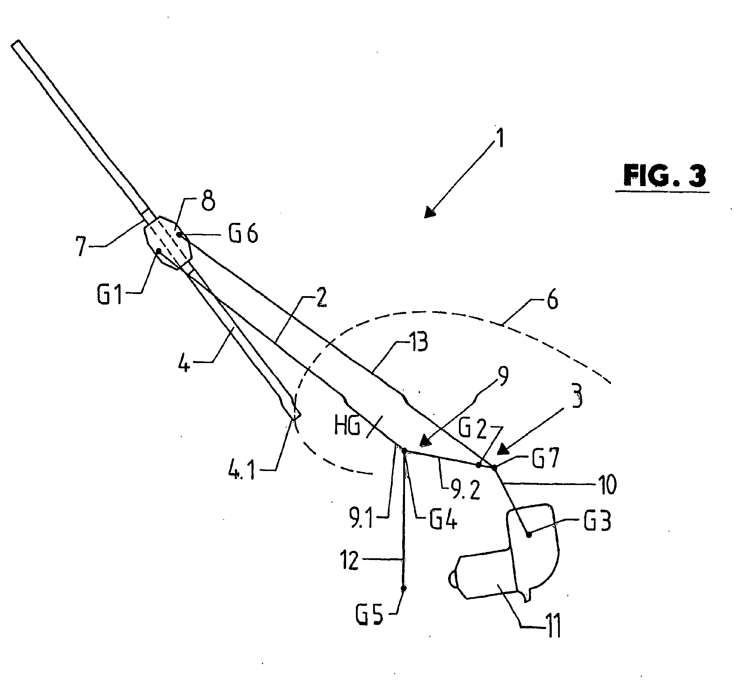

Mit einem Gelenk G6 ist am Wischblattträger 8 weiterhin ein Koppelhebel 13 mit einem Ende angelenkt, dessen anderes Ende mittels eines Gelenkes G7 an dem Antriebshebel 10 angelenkt ist, und zwar zwischen den beiden Enden bzw. Gelenken G2 und G3, wobei das Gelenk G7 dem Gelenk G2 sehr viel näher liegt als dem Gelenk G3. Das Gelenk G6 befindet sich auf der dem Gelenk G1 abgewandten anderen Seite der Wischblattlängsachse und besitzt in Richtung dieser Achse einen etwas kleineren Abstand von dem Wischblattende 4.1 als das Gelenk G1. Das Gelenk G7 ist am Antriebshebel 10 seitlich von einer die Achsen der Gelenke G2 und G3 schneidenden Verbindungslinie VL vorgesehen, und zwar bei in der Parkstellung befindlichem Wischarm 2 an der dem Wischblatt 4 abgewandten Seite der Linie VL und bei in der Wendestellung befindlichem Wischblatt 4 bzw. Wischarm 2 an der dem Wischblatt 4 zugewandten Seite der Verbindungslinie VL, so dass in der Parkstellung der Koppelhebel 13 bei der für die Figuren 1 - 3 gewählten Darstellung den in einer anderen Ebene angeordneten Abschnitt 9.2 des Wischarmlagerelementes 9 schneidet und bei Bewegen des Wischarmes 2 aus der Parkstellung in die Wendestellung die Achse des Gelenks G2 von dem Koppelhebel 13 einmal geschnitten wird.

Die Achsen sämtlicher Gelenke G1 - G7 sind parallel zueinander und senkrecht oder in etwa senkrecht zur Ebene der Frontscheibe 5 orientiert sowie auch senkrecht zur Achse des Hilfsgelenks HG.

Um trotz des Koppelhebels 13 ein Wegklappen bzw. Wegschwenken des Wischarmes 2 um die Achse des Hilfsgelenks HG zu ermöglichen, ist der Koppelhebel 11 zumindest für ein Schwenken um die Achse des Hilfsgelenks HG flexibel ausgebildet, d.h. er besteht beispielsweise aus einem Flachmaterial, z.B. aus Kunststoff oder Federstahl und ist mit seinen Oberflächenseiten dann parallel zur Achse des Hilfsgelenkes HG und damit senkrecht zur Achse der Gelenke G1 - G7 orientiert.

Die Ausbildung ist weiterhin so getroffen, dass sowohl in der Parkstellung (Fig. 1), als auch in der Wendestellung (Fig. 2) die Längserstreckung des vom Wischarm 2 und dem Abschnitt 9.1 gebildeten Hebelarmes und die Längserstreckung des Koppelhebels 13 parallel oder in etwa parallel zueinander liegen. Wie die Figuren 1 und 2 weiterhin zeigen, ist die Kinematik so ausgebildet, dass in beiden Endstellungen, d.h. in der Parkstellung (Fig. 1) und in der maximalen Schwenkstellung bzw. Wendestellung (Fig. 2) die Verbindungslinie VL zwischen den Gelenken G2 und G3 etwa senkrecht zu der Wischblatt-Längsachse WL liegt.

Durch die Gelenke G1, G2, G6 und G7 sowie durch die diese Gelenke miteinander verbindenden Hebelarme oder Hebelabschnitte ist ein zweites Gelenkviereck für die Steuerung des Wischblattträgers 8 und damit des Wischblattes 4 relativ zum Wischarm 2 gebildet, und zwar in der Weise, dass das Wischblatt 4 mit seiner Wischblattlängsachse WL in den beiden Extremstellungen (Parkstellung sowie Wendestellung) die vorstehend erwähnte Lage u.a. zur Erzielung des optimalen Wischfeldes einnimmt.

Bei der dargestellten Ausführungsform weisen die Hebelarme der Kinematik folgende Längen auf:
- Abstand Gelenkachsen G1 - G2: etwa 142 Einheiten
- Abstand Gelenkachsen G1 - G4: etwa 114 Einheiten
- Abstand Gelenkachsen G2 - G3: etwa 35 Einheiten
- Abstand Gelenkachsen G2 - G4: etwa 33 Einheiten
- Abstand Gelenkachsen G2 - G7: etwa 6 Einheiten
- Abstand Gelenkachsen G3 - G7: etwa 29 Einheiten
- Abstand Gelenkachsen G3 - G5: etwa 59 Einheiten
- Abstand Gelenkachsen G4 - G5: etwa 51 Einheiten
- Abstand Gelenkachsen G6 - G7: etwa 138 Einheiten
- Abstand der Gelenkachse G1 - Achse WL: etwa 6 Einheiten
- Abstand der Gelenkachse G6 - Achse WL: etwa 6 Einheiten.

Eine Einheit beträgt dabei bespielsweise etwa 4 oder 4,1 mm. Der Winkel α liegt im Bereich zwischen etwa 145 und 150°

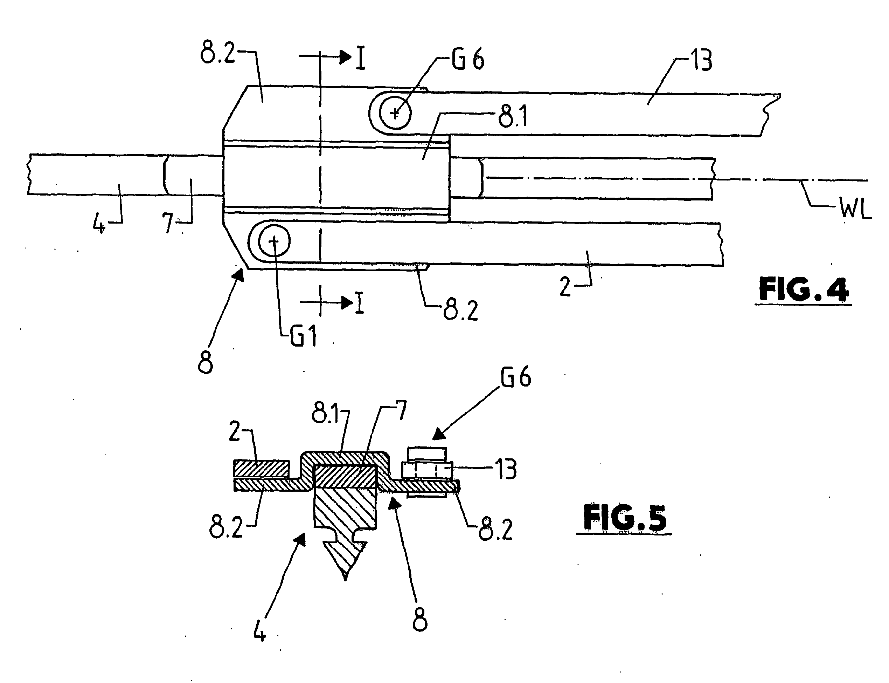

Die Figuren 4 und 5 zeigen noch im Detail den Wischblattträger 8 und die Befestigung des Wischblattes 4 an diesem Wischblattträger. Bei der dargestellten Ausführungsform ist der beispielsweise aus einem Flachmaterial durch Stanzen und Biegen hergestellte Wischblattträger 8 so geformt, dass er einen mittleren, als U-Profil geformten Abschnitt 8.1 aufweist, welcher zu der der Frontscheibe 5 zugewandten Unterseite des Wischblattträgers 8 hin offen und in welchem der an der Oberseite des Wischblattes 4 vorgesehener Wischblatt-Adapter 7 formschlüssig aufgenommen und befestigt ist. Von dem Abschnitt 8.1 bzw. dessen Schenkeln stehen zwei seitliche, flügelartige Abschnitte 8.2 weg, die in einer gemeinsamen Ebene liegen und an denen der Wischarm 2 mit dem Gelenk G1 bzw. der Koppelarm 13 mit dem Gelenk G6 angelenkt sind.

Vorstehend davon ausgegangen, dass das Wischarmlagerelement 9 zwei Abschnitte 9.1 und 9.2 aufweist, und dass der Wischarm 2 über das Hilfsgelenk HG mit dem Abschnitt 9.1 verbunden ist. In der Praxis besteht aber auch die Möglichkeit, den Wischarm 2 an seinem dem Wischblattträger 8 entfernt liegenden Ende mit einem Befestigungsabschnitt lösbar am Wischarmlagerelement 9 zu befestigen, wobei das Hilfsgelenk HG dann zwischen diesem Befestigungsabschnitt und dem restlichen Wischarm 2 vorgesehen ist, so dass im Bedarfsfall der Wischarm 2 leicht montiert oder demontiert werden kann. Weiterhin ist es nicht erforderlich das Wischarmlagerelement 9 als Hebel auszuführen.

Die Gelenke G1 - G7 sind so gestaltet, dass sie verschleißfrei über eine lange Lebensdauer eingesetzt werden können. Für die Gelenke eignen sich beispielsweise Kugelgelenke und/oder abgedichtete Zylinderlager.

### Bezugszeichenliste

- 1: Scheibenwischeranlage
- 2: Wischarm
- 3: Kinematik
- 4: Wischblatt
- 4.1: Wischblattende
- 5: Frontscheibe
- 5.1, 5.2: Rand der Frontscheibe
- 6: Bewegungskurve für Wischblattende 4.1
- 7: Wischblatt-Adapter
- 8: Wischblattträger
- 8.1, 8.2: Abschnitt des Wischblattträgers 8
- 9: Wischarmlagerelement
- 9.1, 9.2: Abschnitt des Wischarmlagerelementes
- 10: Antriebshebel
- 11: elektromotorischer Antrieb
- 12: Steuerhebel
- 13: Koppelhebel

- A: Schwenk- bzw. Pendelbewegung des Antriebshebels 9
- G1 - G7: Gelenke der Wischarm-Kinematik
- HG: Hilfsgelenk zwischen Wischarm 2 und Wischarmträger 3
- WL: Wischblatt-Längsachse
- VL: Verbindungslinie zwischen den Gelenken G2 und G3.

## Patentansprüche

1. Scheibenwischeranlage für Fahrzeuge, insbesondere für Straßenfahrzeuge, mit einem Wischarm (2), mit einem Wischblattträger (8) an einem Ende des Wischarms (2) zum Befestigen eines Wischblattes (4) sowie mit einer Kinematik, über die der Wischarm (2) durch einen elektromotorischen Antrieb (11) für eine Schwenk- oder Wischbewegung zwischen einer Parkstellung und wenigstens einer Wendestellung sowie für eine zusätzliche Hubbewegung radial oder etwa radial zur Schwenk- oder Wischbewegung antreibbar ist, wobei der Wischblattträger (8) gelenkig mit dem Wischarm (2) verbunden und über eine Koppel (13) durch Schwenken, relativ zum Wischarm gesteuert ist, **dadurch gekennzeichnet, dass** die Kinematik (3) so ausgebildet ist, dass mit ihr das am Wischarm (2) vorgesehene Wischblatt (4) über eine Fahrzeug-Frontscheibe (5) zwischen einer Park- oder Ausgangsstellung, in der das Wischblatt (4) mit seiner Wischblattlängsachse (WL) parallel oder im wesentlichen parallel zu einem unteren horizontalen oder im wesentlichen horizontalen Rand (5.1) der Frontscheibe (5) angeordnet ist, und einer maximalen Schwenkstellung, d.h. einer Wendestellung bewegbar ist, in der das Wischblatt (4) mit seiner Wischblattlängsachse (WL) parallel oder im wesentlichen parallel zu der so genannten A-Säule der Fahrzeug-Karosserie und zu dem dortigen Rand (5.2) der Frontscheibe (5) liegt.

2. Scheibenwischeranlage nach Anspruch 1, **dadurch gekennzeichnet, dass** der Wischblattträger (8) über die Koppel (13) mit einem angetriebenen Element (10) der Kinematik verbunden ist.

3. Scheibenwischeranlage nach Anspruch 1, **dadurch gekennzeichnet, dass** die Kinematik ein Wischarmlagerelement (9), an dem der Wischarm (2) mit seinem dem Wischblattträger (8) entfernt liegenden Ende befestigt ist, einen ersten mit dem Wischarmlagerelement (9) über ein erstes Gelenk (G2) verbundenen Hebelarm (10), der um eine von einem zweiten festen bzw. fahrzeugseitigen Gelenk (G3) gebildete Gelenkachse pendelnd schwenkbar ist, sowie einen zweiten mit dem Wischarmlagerelement (9) über ein drittes Gelenk (G4) verbundenen Hebelarm (12) aufweist, der um eine von einem vierten festen bzw. fahrzeugseitigen Gelenk (G5) gebildete Gelenkachse pendelnd schwenkbar gelagert ist, wobei die ersten bis vierten, von einander beabstandeten Gelenke (G2 - G5) ein Gelenkeviereck für die Erzeugung der zusätzlichen Hubbewegung des Wischarmes (2) bzw. des an diesem befestigten Wischblattes (4) bilden.

4. Scheibenwischeranlage nach Anspruch 3, **dadurch gekennzeichnet, dass** der Wischblattträger (8) über wenigstens ein fünftes Gelenk (G1) gelenkig mit dem Wischarm (2) verbunden ist

5. Schelbenwischeranlage nach Anspruch 4, **dadurch gekennzeichnet, dass** der Wischblattträger (8) über die Koppel (13) durch Schwenken um die Achse des fünften Gelenks (G1) derart gesteuert ist, dass das am Wischarm (2) vorgesehene Wischblatt (4) über eine Fahrzeug-Frontscheibe (5) zwischen einer Park- oder Ausgangsstellung, in der das Wischblatt (4) mit seiner Wischblattlängsachse (WL) parallel oder im wesentlichen parallel zu einem unteren horizontalen oder im wesentlichen horizontalen Rand (5.1) der Frontscheibe (5) angeordnet ist, und einer maximalen Schwenkstellung, d.h. einer Wendestellung bewegbar ist, in der das Wischblatt (4) mit seiner Wischblattlängsachse (WL) parallel oder im wesentlichen parallel zu der so genannten A-Säule der Fahrzeug-Karosserie und zu dem dortigen Rand (5.2) der Frontscheibe (5) liegt.

6. Scheibenwischeranlage nach einem der vorhergehenden Ansprüche 3-5, **dadurch gekennzeichnet, dass** der erste oder zweite Hebelarm (10, 12), vorzugsweise der erste Hebelarm (10) durch den elektromotorischen Antrieb (11) für die Schwenkbewegung um die Achse des zweiten bzw, vierten Gelenks (G3, G5) antreibbar ist.

7. Scheibenwischeranlage nach einem der vorhergehenden Ansprüche 3-6, **dadurch gekennzeichnet, dass** die Koppel (13) am ersten Hebelarm (10) an einem Bereich zwischen dem ersten Gelenk (G2) und dem zweiten Gelenk (G3) angreift.

8. Scheibenwischeranlage nach Anspruch 7, **dadurch gekennzeichnet, dass** der Angriffspunkt (G7) der Koppel (13) am ersten Hebelarm (10) dem ersten Gelenk (G2) näher liegt als dem zweiten Gelenk (G3).

9. Scheibenwischeranlage nach Anspruch 7 oder 8, **dadurch gekennzeichnet, dass** der Angriffspunkt (G7) der Koppel (13) am ersten Hebelarm (10) mit seitlichem Abstand von einer Linie (VL) vorgesehen ist, die die Achsen des ersten Gelenks (G2) und des zweiten Gelenks (G3) schneidet

10. Scheibenwischeranlage nach Anspruch 9, **dadurch gekennzeichnet, dass** der Angriffspunkt (G7) der Koppel (13) am ersten Hebelarm (10) in den Endstellungen der Schwenk- oder Wischbewegung des Wischarmes (2) relativ zu diesem auf unterschiedlichen Seiten der Verbindungslinie (VL) angeordnet ist.

11. Scheibenwischeranlage nach einem der vorhergehenden Ansprüche 4-10, **dadurch gekennzeichnet, dass** der Angriffspunkt der Koppel (13) am Wischblattträger (8) und das fünfte Gelenk (G1) auf unterschiedlichen Seiten einer Wischblatt-Längsache (WL) vorgesehen sind.

12. Scheibenwischeranlage nach einem der vorhergehenden Ansprüche 4-11, **dadurch gekennzeichnet, dass** der Angriffspunkt (G6) der Koppel (13) am Wischblattträger (8) einem dem Wischarmlagerelement (9) zugewandten Wischblattende (4.1) in Wischblatt-Längsrichtung (WL) näher liegt als die Achse des fünften Gelenkes (G1).

13. Scheibenwischeranlage nach einem der vorhergehenden Ansprüche 4-12, **dadurch gekennzeichnet, dass** der Angriffspunkt der Koppel (13) am Wischblatttrager. (8) und/oder am ersten Hebelarm (10) von einem sechsten Gelenk (G6) bzw. von einem siebten Gelenk (G7) gebildet sind.

14. Scheibenwischeranlage nach Anspruch 13, **dadurch gekennzeichnet, dass** die Achsen der Gelenke (G1 - G7) parallel zueinander und/oder parallel zur Achse der Schwenk- oder Wischbewegung des Wischarmes (2) orientiert sind.

15. Scheibenwischeranlage nach einem der vorhergehenden Ansprüche 4-14, **dadurch gekennzeichnet, dass** das erste Gelenk (G2), das fünfte Gelenk (G1) und die beiden Angriffspunkte (G6, G7) der Koppel (13) an dem Wischblattträger (8) sowie am ersten Hebelarm (10) ein zweites Gelenkviereck zur Steuerung des Wischblattträgers (8) bzw. des Wischblattes (4) bilden.

16. Scheibenwischeranlage nach einem der vorhergehenden Ansprüche, **dadurch gekennzeichnet, dass** die Koppel (13) derart vorgesehen ist, dass sie beim Schwenken des Wischarmes (2) aus der Parkstellung in die dieser Parkstellung entfernte Wendestellung dem Wischarm (2) voraus eilt.

17. Scheibenwischeranlage nach einem der vorhergehenden Ansprüche 3-16, **dadurch gekennzeichnet, dass** die Koppel (13) bei in der Parkstellung befindlichem Wischarm (2) eine Verbindungslinie zwischen dem ersten Gelenk (G2) und dem dritten Gelenk (G4) schneidet.

18. Scheibenwischeranlage nach einem der vorhergehenden Ansprüche 4-17, **dadurch gekennzeichnet, dass** ein vom Wischarmlagerelement (9) zwischen dem ersten Gelenk (G2) und dem dritten Gelenk (G4) gebildeter Hebelarm (9.2) mit einer Verbindungslinie zwischen dem dritten Gelenk (G4) und dem fünften Gelenk (G1) einen Winkel (α) wesentlich größer als 90°, aber kleiner als 180°, beispielsweise einen Winkel im Bereich zwischen 145° bis 150° einschließt, und dass sich dieser Winkel (α) zu einer Wischblatt-Längsachse (WL) hin öffnet.

19. Scheibenwischeranlage nach einem der vorhergehenden Ansprüche 4-18, **dadurch gekennzeichnet, dass** in den Endstellungen des Wischarmes (2) der erste Hebelarm (10) bzw. die Verbindungslinie (VL) zwischen dem ersten Gelenk (G2) und dem zweiten Gelenk (G3) jeweils senkrecht oder etwa senkrecht zur Wischblatt-Längsachse (WL) orientiert ist.

20. Scheibenwischeranlage nach einem der vorhergehenden Ansprüche 13-19, **dadurch gekennzeichnet, dass** die Gelenkachsen (G1 - G7) folgende, durch ihre. Abstände definierte Lage relativ zueinander aufweisen:
| Abstand zwischen: | Einheiten: |
|---|---|
| erste Gelenkachse (G2) - zweite Gelenkachse (G3) | etwa 35 Einheiten |
| erste Gelenkachse (G2) - dritte Gelenkachse (G4) | etwa 33 Einheiten |
| erste Gelenkachse (G2) - fünfte Gelenkachse (G1) | etwa 142 Einheiten |
| erste Gelenkachse (G2) - siebte Gelenkachse (G7) | etwa 6 Einheiten |
| zweite Gelenkachse (G3) - vierte Gelenkachse (G5) | etwa 59 Einheiten |
| zweite Gelenkachse (G3) - siebte Gelenkachse (G7) | etwa 29 Einheiten |
| dritte Gelenkachse (G4) - vierte Gelenkachse (G5) | etwa 51 Einheiten |
| dritte Gelenkachse (G4) - fünfte Gelenkachse (G1) | etwa 114 Einheiten |
| sechste Gelenkachse (G6) - siebte Gelenkachse (G7) | etwa 138 Einheiten |
wobei eine Einheit beispielsweise etwa 4,1 mm beträgt.

## Claims

1. Windscreen wiper modules for vehicles, particularly road vehicles, having a wiper arm (2), having a wiper blade carrier (8) at one end of the wiper arm (2) for attachment of a wiper blade (4) and having kinematics, by means of which the wiper arm (2) is drivable by and electromotor drive (11) for a pivoting or wiping movement between a parking position and at least one reversing position and for and additional lifting movement radially or approximately radially to the pivoting or wiping movement, whereby the wiper blade carrier (8) is flexibly connected to the wiper arm (2) and is controlled by a connecting rod (13) by pivoting in relation to the wiper arm, **characterised in that** the kinematics (3) are designed such that with the latter, the wiper blade (4) provided on the wiper arm (2) is movable over a vehicle front windscreen (5) between a parking or initial position in which the wiper blade (4) is arranged with its wiper blade longitudinal axis (WL) parallel or essentially parallel to a bottom horizontal or essentially horizontal edge (5.1) of the front windscreen (5) and a maximum pivoting position, i.e. a reversing position, in which the wiper blade (4) lies with its wiper blade longitudinal axis (WL) parallel or essentially parallel to the so-called A-pillar of the vehicle bodywork and to the edge at this position (5.2) of the front windscreen (5).

2. Windscreen wiper module according to claim 1, **characterised in that** the wiper blade carrier (8) is connected to a driven element (10) of the kinematics by means of the connecting rod (13).

3. Windscreen wiper module according to claim 1, **characterised in that** the kinematics have a wiper arm pivot assembly element (9), to which the wiper arm (2) is attached at its end distant from the wiper blade carrier (8), a first lever arm (10) connected by means of a first articulation (G2) to the wiper arm pivot assembly element (9), which can be pivoted in an oscillating fashion around an articulated axis formed by a second fixed articulation (G3) on the vehicle side, in addition to a second lever arm (12) connected by means of a third articulation (G4) to the wiper arm pivot assembly element (9), which is mounted in an oscillating and pivoting fashion around an articulated axis formed by a fourth fixed articulation (G5) on the vehicle side, with the first to fourth articulations (G2 - G5) spaced at an interval from one another form an articulated tetragon for generation of the additional lifting movement of the wiper arm (2) and the wiper blade (4) attached to the latter.

4. Windscreen wiper module according to claim 3, **characterised in that that** wiper blade carrier (8) is flexibly connected to the wiper arm (2) by at least a fifth articulation (G1).

5. Windscreen wiper module according to claim 4, **characterised in that** the wiper blade carrier (8) is controlled by means of the connecting rod (13) by pivoting around the axis of the fifth articulation (G1) in such a way that the wiper blade (4) provided on the wiper arm (2) is movable over a vehicle front windscreen (5) between a parking or initial position in which the wiper blade (4) is arranged with its wiper blade longitudinal axis (WL) parallel or essentially parallel to a bottom horizontal or essentially horizontal edge (5.1) of the front windscreen (5) and a maximum pivoting position, i.e. a reversing position, in which the wiper blade (4) lies with its wiper blade longitudinal axis (WL) parallel or essentially parallel to the so-called A-pillar of the vehicle bodywork and to the edge at this position (5.2) of the front windscreen (5).

6. Windscreen wiper module according to one of the above claims 3-5, **characterised in that** the first or second lever arm (10, 12), preferably the first lever arm (10) is drivable by the electromotor drive (11) for the pivoting movement around the axis of the second and fourth articulation (G3, G5).

7. Windscreen wiper module according to one of the above claims 3-6, **characterised in that** the connecting rod (13) on the first lever arm (10) engages at an area between the first articulation (G2) and the second articulation (G3).

8. Windscreen wiper module according to claim 7, **characterised in that** the engagement point (G7) of the connecting rod (13) on the first lever arm (10) is nearer to the first articulation (G2) than to the second articulation (G3).

9. Windscreen wiper module according to claim 7 or 8, **characterised in that** the engagement point (G7) of the connecting rod (13) on the first lever arm (10) is provided at a lateral distance from a line (VL) that intersects the axes of the first articulation (G2) and the second articulation (G3).

10. Windscreen wiper module according to claim 9, **characterised in that** the engagement point (G7) of the connecting rod (13) on the first lever arm (10) at the end positions of the pivoting or wiping movement of the wiper arm (2) is arranged relatively to the latter on different sides of the connecting line (VL).

11. Windscreen wiper module according to one of the above claims 4-10, **characterised in that** the engagement point of the connecting rod (13) on the wiper blade carrier (8) and the fifth articulation (G1) are provided on different sides of a wiper blade longitudinal axis (WL).

12. Windscreen wiper module according to one of the above claims 4-11, **characterised in that that** engagement point (G6) of the connecting rod (13) on the wiper blade carrier (8) is nearer to a wiper blade end (4.1) facing the wiper arm pivot assembly element (9) in the wiper blade longitudinal direction (WL) than the axis of the fifth articulation (G1).

13. Windscreen wiper module according to one of the above claims 4-12, **characterised in that** the engagement point of the connecting rod (13) on the wiper blade carrier (8) and/or on the first lever arm (10) are formed by a sixth articulation (G6) and a seventh articulation (G7).

14. Windscreen wiper module according to claim 13, **characterised in that** the axes of the articulations (G1 - G7) are oriented parallel to one another and/or parallel to the axis of the pivoting or wiping movement of the wiper arm (2).

15. Windscreen wiper module according to one of the above claims 4-14, **characterised in that** the first articulation (G2), the fifth articulation (G1) and the two engagement points (G6, G7) of the connecting rod (13) on the wiper blade carrier (8) and on the first lever arm (10) form a second articulated tetragon for control of the wiper blade carrier (8) and the wiper blade (4).

16. Windscreen wiper module according to one of the above claims, **characterised in that** the connecting rod (13) is provided such that on pivoting of the wiper arm (2) from the parking position to the reversing position distant from this parking position, it runs ahead of the wiper arm.

17. Windscreen wiper module according to one of the above claims 3-16, **characterised in that** the connecting rod (13), with the wiper arm (2) in the parking position, intersects a connecting line between the first articulation (G2) and the third articulation (G4).

18. Windscreen wiper module according to one of the above claims 4-17, **characterised in that** a lever arm (9.2) formed by the wiper arm pivot assembly element (9) between the first articulation (G2) and the third articulation (G4), forms an angle (α) considerably larger than 90° but smaller than 180°, for example an angle in the range between 145° to 150°, with a connecting line between the third articulation (G4) and the fifth articulation (G1) and that this angle (α) opens towards a wiper blade longitudinal axis (WL).

19. Windscreen wiper module according to one of the above claims 4-18, **characterised in that** in the end positions of the wiper arm (2), the first lever arm (10) and the connecting line (VL) between the first articulation (G2) and the second articulation (G3) are respectively oriented vertically or approximately vertically to the wiper blade longitudinal axis (WL).

20. Windscreen wiper module according to one of the above claims 13-19, **characterised in that** the articulated axes (G1 - G7) have the following position in relation to one another defined by their distances:
Distance between: units:
first articulated axis (G2) - second articulated axis (G3) approx. 35 units
first articulated axis (G2) - third articulated axis (G4) approx. 33 units
first articulated axis (G2) - fifth articulated axis (G1) approx. 142 units
first articulated axis (G2) - seventh articulated axis (G7) approx. 6 units
second articulated axis (G3) - fourth articulated axis (G5) approx. 59 units
second articulated axis (G3) - seventh articulated axis (G7) approx. 29 units
third articulated axis (G4) - fourth articulated axis (G5) approx. 51 units
third articulated axis (G4) - fifth articulated axis (G1) approx. 114 units
sixth articulated axis (G6) - seventh articulated axis (G7) approx. 138 units, with one unit being 4.1 mm for example.

## Revendications

1. Système d'essuie-glace destiné à des véhicules, notamment des véhicules routiers, comportant un porte balai (2), comportant un support (8) de balai à une extrémité du porte balai (2) pour la fixation d'un balai (4), ainsi que comportant une cinématique par l'intermédiaire de laquelle le porte balai (2) peut être entraîné par un mécanisme d'entraînement par moteur électrique (11) dans un mouvement de pivotement ou de balayage entre une position parking et au moins une position d'inversion, ainsi que dans un mouvement supplémentaire de levage radial ou pratiquement radial par rapport au mouvement de pivotement ou de balayage, le support (8) de balai étant relié en articulation au porte balai (2) et commandé par l'intermédiaire d'une bielle (13) par pivotement par rapport au porte balai, **caractérisé en ce que** la cinématique est réalisée de telle manière qu'elle fait que le balai (4) prévu sur le porte balai (2) peut se déplacer sur le pare-brise (5) d'un véhicule entre une position parking ou position initiale dans laquelle le balai (4) est disposé avec son axe longitudinal (WL) de balai parallèle ou sensiblement parallèle à un bord inférieur (5.1) horizontal ou sensiblement horizontal du pare-brise (5), et une position de pivotement maximale, c'est-à-dire une position d'inversion, dans laquelle le balai (4) se trouve avec son axe longitudinal (WL) de balai parallèle ou sensiblement parallèle à ce qu'on appelle le pied avant de la carrosserie du véhicule et au bord (5.2) du pare-brise (5) qui s'y trouve.

2. Système d'essuie-glace selon la revendication 1, **caractérisé en ce que** le support (8) de balai est relié par la bielle (13) à un élément mené (10) de la cinématique.

3. Système d'essuie-glace selon la revendication 1, **caractérisé en ce que** la cinématique présente un élément d'appui (9) du porte balai, auquel le porte balai (2) est fixé par son extrémité se trouvant à distance du support (8) de balai, un premier bras de levier (10) relié à l'élément d'appui (9) de porte balai par l'intermédiaire d'une première articulation (G2) et qui peut pivoter en oscillation autour d'un axe d'articulation formé par une deuxième articulation (G3) fixe et/ou côté véhicule, ainsi qu'un deuxième bras de levier (12) relié à l'élément d'appui (9) du porte balai par l'intermédiaire d'une troisième articulation (G4) et qui est monté pour pouvoir pivoter en oscillation autour d'un axe d'articulation formé par une quatrième articulation (G5) fixe et/ou côté véhicule, les première à quatrième articulations (G2 - G5) écartées les unes des autres formant un quadrilatère articulé pour la production du mouvement de levage supplémentaire du porte-balai (2) et/ou du balai (4) qui y est fixé.

4. Système d'essuie-glace selon la revendication 3, **caractérisé en ce que** le support (8) du balai est relié au porte balai (2) par l'intermédiaire d'au moins une cinquième articulation (G1).

5. Système d'essuie-glace selon la revendication 4, **caractérisé en ce que** le support (8) du balai peut être commandé par l'intermédiaire de la bielle (13) par pivotement autour de l'axe de la cinquième articulation (G1) de telle manière que le balai (4) prévu sur le porte balai (2) peut se déplacer sur le pare-brise (5) d'un véhicule entre une position parking ou position initiale dans laquelle le balai (4) est disposé avec son axe longitudinal (WL) de balai parallèle ou sensiblement parallèle à un bord inférieur (5.1) horizontal ou sensiblement horizontal du pare-brise (5), et une position de pivotement maximale, c'est-à-dire une position d'inversion, dans laquelle le balai (4) se trouve avec son axe longitudinal (WL) de balai parallèle ou sensiblement parallèle à ce qu'on appelle le pied avant de la carrosserie du véhicule et au bord (5.2) du pare-brise (5) qui s'y trouve.

6. Système d'essuie-glace selon une des revendications précédentes 3 à 5, **caractérisé en ce que** le premier ou le deuxième bras de levier (10, 12), de préférence le premier bras de levier (10), peut être entraîné par le mécanisme d'entraînement par moteur électrique (11) pour le mouvement de pivotement autour de l'axe de la deuxième et/ou de la quatrième articulation (G3, G5).

7. Système d'essuie-glace selon une des revendications précédentes 3 à 6, **caractérisé en ce que** la bielle (13) engrène le premier bras de levier (10) dans une zone située entre la première articulation (G2) et la deuxième articulation (G3).

8. Système d'essuie-glace selon la revendication 7, **caractérisé en ce que** le point d'engrènement (G7) de la bielle (13) sur le premier bras de levier (10) se trouve plus près de la première articulation (G2) que de la deuxième articulation (G3).

9. Système d'essuie-glace selon la revendication 7 ou 8, **caractérisé en ce que** le point d'engrènement (G7) de la bielle (13) sur le premier bras de levier (10) est prévu pour présenter un écartement latéral par rapport à une ligne (VL) qui coupe les axes de la première articulation (G2) et de la deuxième articulation (G3).

10. Système d'essuie-glace selon la revendication 9, **caractérisé en ce que** le point d'engrènement (G7) de la bielle (13) sur le premier bras de levier (10), dans les positions extrêmes du mouvement de pivotement et/ou de balayage du porte balai (2), est disposé par rapport à ce dernier sur des côtés différents de la ligne de raccordement (VL).

11. Système d'essuie-glace selon une des revendications précédentes 4 à 10, **caractérisé en ce que** le point d'engrènement de la bielle (13) sur le support (8) de balai et la cinquième articulation (G1) sont prévus sur des côtés différents d'un axe longitudinal (WL) du balai.

12. Système d'essuie-glace selon une des revendications précédentes 4 à 11, **caractérisé en ce que** le point d'engrènement de la bielle (13) sur le support (8) de balai se trouve plus près dans le sens longitudinal (WL) du balai d'une extrémité (4.1) du balai faisant face à l'élément d'appui (9) du porte balai que l'axe de la cinquième articulation (G1).

13. Système d'essuie-glace selon une des revendications précédentes 4 à 12, **caractérisé en ce que** le point d'engrènement de la bielle (13) sur le support (8) de balai et/ou sur le premier bras de levier (10) est formé par une sixième articulation (G6) et/ou par une septième articulation (G7).

14. Système d'essuie-glace selon la revendication 13, **caractérisé en ce que** les axes des articulations (G1 à G7) sont orientés parallèlement les uns aux autres et/ou parallèlement à l'axe du mouvement de pivotement ou de balayage du porte balai (2).

15. Système d'essuie-glace selon une des revendications précédentes 4 à 14, **caractérisé en ce que** la première articulation (G2), la cinquième articulation (G1) et les deux points d'engrènement (G6, G7) de la bielle (13) sur le support (8) de balai ainsi que sur le premier bras de levier (10) forment un deuxième quadrilatère articulé pour la commande du support (8) de balai et/ou du balai (4).

16. Système d'essuie-glace selon une des revendications précédentes, **caractérisé en ce que** la bielle (13) est prévue de telle manière qu'elle devance le porte balai (2) lors du pivotement du porte balai (2) de la position parking à la position d'inversion éloignée de ladite position parking.

17. Système d'essuie-glace selon une des revendications précédentes 3 à 16, **caractérisé en ce que** la bielle (13) coupe une ligne de raccordement entre la première articulation (G2) et la troisième articulation (G4) lorsque le porte balai (2) se trouve en position parking.

18. Système d'essuie-glace selon une des revendications précédentes 4 à 17, **caractérisé en ce qu'**un bras de levier (9.2) formé par l'élément d'appui (9) du porte balai entre la première articulation (G2) et la troisième articulation (G4) définit avec une ligne de raccordement entre la troisième articulation (G4) et la cinquième articulation (G1) un angle (α) de sensiblement plus de 90°, mais de moins de 180°, par exemple un angle compris entre 145° et 150°, et **en ce que** cet angle (α) est ouvert en direction d'un axe longitudinal (WL) du balai.

19. Système d'essuie-glace selon une des revendications précédentes 4 à 18, **caractérisé en ce que** dans les positions extrêmes du porte balai (2), le premier bras de levier (10) et/ou la ligne de raccordement (VL) entre la première articulation (G2) et la deuxième articulation (G3) sont respectivement perpendiculaires ou à peu près perpendiculaires à l'axe longitudinal (WL) du balai.

20. Système d'essuie-glace selon une des revendications précédentes 13 à 18, **caractérisé en ce que** les axes d'articulation (G1 à G7) présentent les uns par rapport aux autres des positions définies par leur écartement :
écartement entre :
unités :
premier axe d'articulation (G2) - deuxième axe d'articulation (G3)
environ 35 unités
premier axe d'articulation (G2) - troisième axe d'articulation (G4)
environ 33 unités
premier axe d'articulation (G2) - cinquième axe d'articulation (G1)
environ 142 unités
premier axe d'articulation (G2) - septième axe d'articulation (G7)
environ 6 unités
deuxième axe d'articulation (G3) - quatrième axe d'articulation (G5)
environ 59 unités
deuxième axe d'articulation (G3) - septième axe d'articulation (G7)
environ 29 unités
troisième axe d'articulation (G4) - quatrième axe d'articulation (G5)
environ 51 unités
troisième axe d'articulation (G4) - cinquième axe d'articulation (G1)
environ 114 unités
sixième axe d'articulation (G6) - septième axe d'articulation (G7)
environ 138 unités,
une unité s'élevant par exemple à environ 4,1 mm.
